# EUROPEAN PATENT APPLICATION

(11) **EP 4 660 800 A1**
(43) Date of publication of application: **10.12.2025**
(21) Application number: 25180150.2
(22) Date of filing: 02.06.2025
(51) Int. Cl.: G06F 9/46

(54) **RESTORING PROGRAM STATES USING MICROARCHITECTURAL SCRATCHPADS**

(30) Priority: 03.06.2024 US 202418732065
(71) Applicant: Google LLC, Mountain View, CA 94043 (US)
(72) Inventor: KENNELLY, Christopher Thomas, Mountain View, California, 94043 (US); HASHEMI, Milad Olia, Mountain View, California, 94043 (US)
(74) Representative: Betten & Resch

(57) **Abstract**

Aspects of the disclosed technology include techniques and mechanisms for restoring program states using microarchitectural scratchpads. A processor is configured to store, in a buffer, program state data which indicates a current state of microarchitectural registers therein during execution of a current program. Based on receiving a command to terminate execution of the current program and restore execution of a different program, the processor retrieves, from the buffer, the program state data associated with the program to be executed and restores the retrieved data.

## Description

### BACKGROUND

Processors can be configured to record program state data based on receiving commands to perform context switching. The processor can record the current state of the program, referred to as program state data, in a buffer. Based on receiving a user command to terminate execution of a current program and to restore execution of a previously executed program, the processor can restore the previously executed program by retrieving the program state data associated with the previously executed program from the buffer and restoring the retrieved data. Doing so restores the previously executed program, but does not restore the state of microarchitectural registers within the processor. Microarchitectural registers are stateful devices that can be used during program execution to process program state data and to observe program state data patterns.

During each context switch, the processor, and the microarchitectural registers therein, observe program execution and use identified patterns of program execution to predict the data that may be needed and to issue memory accesses ahead of the next piece of data being required. For data center applications that incur high context switch rates, the processor frequently changes between different programs, each time having to observe program execution to conduct pattern recognition. Frequent context switches can defeat the pattern recognition abilities of modern microarchitectural registers, as they may be insufficiently warmed up a first program by the time a context switch occurs and a second program is executed instead. As such, when a subsequent context switch occurs and processor restores execution of the first program, the microarchitectural registers may be required to repeat pattern recognition.

### SUMMARY

Aspects of the disclosed technology include methods, apparatuses, systems, and computer-readable media for restoring program states using microarchitectural scratchpads. A processor is configured to store, in a buffer (also referred to herein as a scratchpad memory unit and/or a microarchitectural scratchpad memory unit), program state data which indicates a current state of microarchitectural registers therein during execution of a program. Based on receiving a command to restore execution of a program that is different from the program currently executing, the processor terminates execution of the current program. The processor also stores program state data in the buffer. The program state data may indicate the state of the program prior to termination.

To initate execution of the requested program, the processor retrieves, from the buffer, the program state data associated with the program to be executed and restores the retrieved data. The program state data that is restored indicates the state of microarchitectural registers that are necessary for resuming execution of the requested program as if execution of the requested program never terminated. In particular, the program state data includes a minimum amount of data needed to replicate the state of each microarchitectural register during the last execution of the requested program.

The size of the buffer that stores the program state data can dynamically change depending on the amount of data that is needed to resume program execution with reduced interruptions. For example, the buffer can be augmented to store program state data that also indicates a current state of various stateful components associated with the processor, such as branch predictors, branch target buffers (BTBs), translation lookaside buffers (TLBs), hardware prefetchers, or the like. Restoring the program state data retrieved from the buffer reduces a processor "warm up" period during which processors typically observe program execution and conduct pattern recognition until the processor reaches a steady-state. The steady-state may refer to a point during program execution where the stateful devices associated with the processor can accurately predict the program data to be returned to the user based on the options presented.

An aspect of the disclosure provides a method for restoring program states. The method may comprise receiving, by one or more processors, a command to perform context switching from a first program to a second program; retrieving, from a buffer, a state of the second program, wherein the state of the second program comprises data indicating internal register states during a previous execution of the second program; and restoring the state of the second program and the internal register states to resume execution of the second program.

In some examples, the size of the buffer changes dynamically based on an amount of internal register state data to be stored in the buffer.

In some examples, data indicating a state of the first program may be stored in the buffer. In some instances, the state of the first program comprises internal register state data.

In some examples, restoring the internal register states causes a processor to reduce an amount of time to perform pattern recognition to achieve a processor steady-state, wherein the processor steady-state indicates the processor achieved immediate pattern context based on restoring the state of the second program and the internal register states.

In some examples, restoring the state of the second program and the internal register states comprises restoring internal register state values from the previous execution of the second program.

In some examples, the buffer corresponds to a microarchitectural scratchpad memory unit.

In some examples, each internal register comprises a microarchitectural scratchpad memory unit. In some instances, the microarchitectural scratchpad memory unit is wiped after restoration of the second program.

Another aspect of the disclosure relates to a system for restoring program states. The system may comprise: one or more processors; one or more registers within the one or more processors, wherein a processor of the one or more processors is configured to: receive a command to perform context switching from a first program to a second program; retrieve, from a buffer, a state of the second program, wherein the state of the second program comprises data indicating internal register states during a previous execution of the second program; and restore the state of the second program and the internal register states to resume execution of the second program.

In some examples, the size of the buffer changes dynamically based on an amount of internal register state data to be stored in the buffer.

In some examples, the processor is further configured to store data indicating a state of the first program in the buffer, wherein the state of the first program comprises internal register state data.

In some examples, processor is further configured to, based on restoring the internal register states, reduce an amount of time to perform pattern recognition to achieve a processor steady-state, wherein the processor steady-state indicates the processor achieved immediate pattern context based on restoring the state of the second program and the internal register states.

In some examples, each internal register comprises a microarchitectural scratchpad memory unit. In some instances, the processor is further configured to clear the microarchitectural scratchpad memory unit after restoration of the second program.

In some examples, the processor is further configured to restore internal register state values from the previous execution of the second program.

Another aspect of the disclosure is directed to a non-transitory computer readable storage medium storing instructions that, when executed by one or more processors for restoring program states, cause the one or more processors to: receive a command to perform context switching from a first program to a second program; retrieve, from a buffer, a state of the second program, wherein the state of the second program comprises data indicating internal register states during a previous execution of the second program; and restore the state of the second program and the internal register states to resume execution of the second program.

In some examples, restoring the state of the second program and the internal register states further causes the one or more processors to restore internal register state values from a previous execution of the second program.

In some examples, the buffer corresponds to a microarchitectural scratchpad memory unit.

In some examples, each internal register comprises a microarchitectural scratchpad memory unit.

In some examples, the one or more processors are further configured to store data indicating a state of the first program in the buffer, wherein the state of the first program comprises internal register state data.

Another aspect of the disclosure relates to techniques and mechanisms for restoring program states using microarchitectural scratchpads. A processor is configured to store, in a buffer, program state data which indicates a current state of microarchitectural registers therein during execution of a current program. Based on receiving a command to terminate execution of the current program and restore execution of a different program, the processor retrieves, from the buffer, the program state data associated with the program to be executed and restores the retrieved data.

### BRIEF DESCRIPTION OF THE DRAWINGS

FIG. 1 illustrates an example central processing unit configuration for restoring program states using microarchitectural scratchpads, in accordance with aspects of the disclosure.
FIG. 2 illustrates an example central processing unit configuration for restoring program states using microarchitectural scratchpads, in accordance with aspects of the disclosure.
FIG. 3 illustrates an example central processing unit configuration for restoring program states using microarchitectural scratchpads, in accordance with aspects of the disclosure.
FIG. 4 illustrates a flow diagram for an example method for restoring program states using microarchitectural scratchpads, in accordance with aspects of the disclosure.

### DETAILED DESCRIPTION

The technology described herein is directed to restoring program states using program data that indicates a current state of a program as well as a current state of microarchitectural components (e.g., microarchitectural registers, scratchpad memory units, microarchitectural scratchpad memory units) that are used during program execution. Storing data that indicates the current state of the internal registers that are used during the execution of the program allows a processor to terminate execution of the program at a first time point and restore execution of the program at a later time point with immediate pattern context for the program. Achieving immediate pattern context for the program is beneficial for data center programs that experience a high context switch rate because the processor might not achieve a steady-state prior to the next context switch without the data that indicates the current state of the micro architectural components therein. During restoration of the program, the processor might not require a warm up period to observe program execution in order to achieve a steady-state.

The processor is able to bypass the warm up period when a buffer storing the program state data is augmented to also store data indicating the current state of internal registers (e.g., each microarchitectural register), such as a value of each internal register. In this regard, restoring the program state data restores the program including restoring the state of the internal registers when the program was last executed, when the processor was warmed or warming up. The amount of memory available to the buffer may dynamically change based on an amount of program state data and internal register data needed to restore program execution with at least some pattern context. In some instances, only a portion of the current state of the internal registers may be stored. By doing such, a portion of the state of the internal registers when the program was last executed may be restored, thereby decreasing the warm up period needed for the processor.

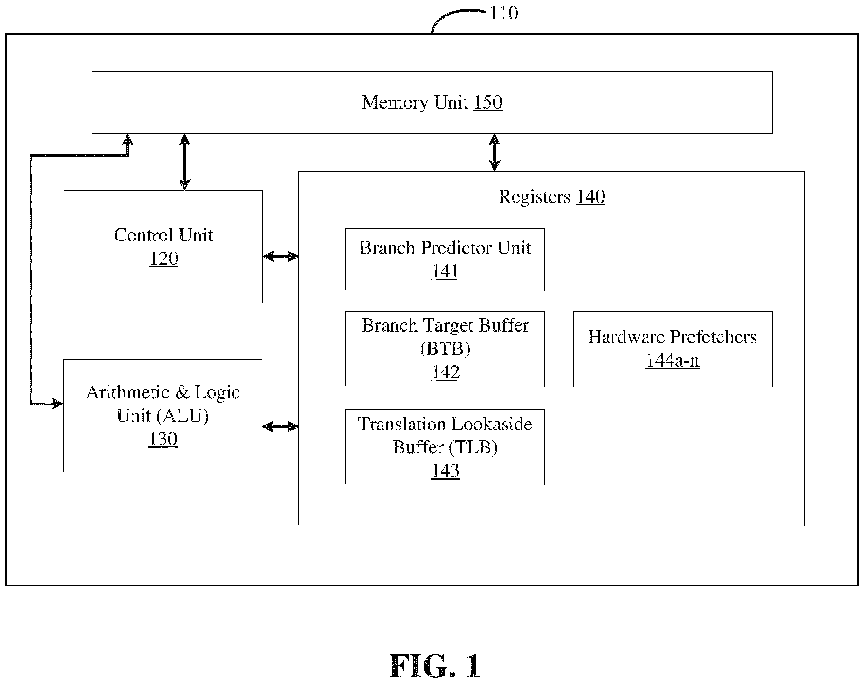

FIG. 1 illustrates an example central processing unit (CPU) (referred to herein as a processor) for restoring program states. As illustrated in FIG. 1, processor 110 contains at least control unit 120, arithmetic and logic unit (ALU) 130, registers 140, and memory unit 150. Registers 140 contain one or more microarchitectural components that processor 110 can use to execute one or more programs. Registers 140 may be hardware and software components, such as branch predictor unit 141, branch target buffer (BTB) 142, translation lookaside buffer (TLB) 143, and hardware prefetchers 144a-n. While four register components are illustrated, the processor may contain more or fewer than four register components.

Processor 110 uses the components therein to execute one or more programs. The programs to be executed may be user-selected (e.g., selected via user commands to initiate program execution). Processor 110 receives one or more user commands as input data and, based on the received input data, retrieves from memory unit 150 the data that is needed to initiate program execution. As described herein, in some instances, processor 110 receives one or more commands to perform context switching (e.g., terminate the execution of a current program to restore the execution of a different program) and retrieves from memory unit 150 data that can be used to restore the previously executed program.

More specifically, to perform context switching, processor 110 retrieves from memory unit 150 at least program state data and internal register data. The program state data captures the last state of program execution before program execution is terminated. Processor 110 uses the program state data to restore the last state of the program prior to program termination. To avoid depleting an amount of available memory within memory unit 150, the program state data might not include the totality of program data. Processor 110 identifies a significant subset of the program data that can be used to restore the last state of program execution. In some instances, processor 110 is configured to retrieve a pre-determined amount of program data to be used for program restoration. Processor 110 can be configured to identify specific data within the program data to be used for program restoration. However, in some instances, processor 110 may be configured to dynamically identify an amount of program data to be used for program restoration based on an amount of available memory within memory unit 150. Further, processor 110 may be configured to dynamically identify the specific program data to be stored in memory unit 150.

The internal register data captures the last state of stateful microarchitectural components within registers 140 before program execution is terminated. Components within registers 140 can be used to execute one or more programs and, as such, the components process and/or store information pertaining to program execution. For example, branch predictor unit 141 monitors options (e.g., branches) that are presented to a user and pre-emptively retrieves data that may be needed for execution of each branch to ensure the program is able to execute with reduced latency. Further, hardware prefetchers 144a-n may predict and retrieve data that a user is likely to request and may temporarily store the retrieved data in, for example, scratchpad memory units and/or microarchitectural scratchpad memory units. Since cache replacement states and cache replacement policies can also impact the performance of processor 110 during program restoration, the internal register data may also capture cache replacement states and cache replacement policies.

The internal register data captures a subset of each register's processing history that can be used to restore each register's processing without starting from scratch. As such, each register can bypass a warm up period, or reduce the warm up period, in which the register typically observes program execution to conduct pattern recognition. Pattern recognition refers to monitoring user input over a period of time to identify patterns based on the branches presented to the user and the user input received in response to the presented branches. Each register uses pattern recognition (also referred to herein as pattern context) to at least predict user input, retrieve the necessary data for each possible user input, and efficiently respond to the user input. Therefore, the internal register data captures, for each register, a subset of register processing history and data that enables the register to resume processing as if the program was never terminated.

In some instances, each internal register includes a microarchitectural scratchpad memory unit for storing the processing history and processing data associated with a register. Processor 110 may execute read operations on the microarchitectural scratchpad memory units associated with each of the internal registers to identify the internal register data to be used for program restoration. The microarchitectural scratchpad memory units may be erased during each context switch. As such, a microarchitectural scratchpad memory unit within a register may be populated during the execution of a new or different program, and may be erased during termination of program execution.

Processor 110 can be configured to dynamically identify the subset of register processing history that is needed to restore program execution. The register processing history and data that is recorded for each register may differ depending on the type of register. For example, branch predictor unit 141 and hardware prefetchers 144a-n may keep track of one or more tables to predict user input relevant to a particular program. As such, processor 110 may identify one or more tables or a subset of data from the one or more tables to be stored in memory unit 150 for program restoration.

During program restoration, processor 110 restores the program to its last state prior to program termination and restores the state of each register such that processor 110 achieves a steady-state. The steady-state indicates that processor 110 does not require a warm up period to conduct pattern recognition, but instead has achieved immediate pattern context from restoration of the program and the registers. For example, the steady-state indicates that processor 110 does not require a warm up period for at least branch predictor unit 141 and hardware prefetchers 144a-n to identify user input patterns and/or data retrieval patterns from previous program execution instances.

Processor 110 stores the program state data and the internal register data in a buffer, referred to herein as memory unit 150. The size of memory unit 150 (e.g., a number of bytes of memory) can change dynamically based on an amount of data needed to restore a program and an amount of memory needed to store the data. More specifically, the size of memory unit 150 can be augmented and/or extended to store the internal register data. Memory unti 150 may be software controlled such that the amount of available memory therein changes depending on at least system preferences and/or program restoration preferences.

In some instances, the volume of program state data and internal register data stored in the buffer to achieve immediate pattern recognition may be substantial. As such, the stored data may be compressed or otherwise encoded to achieve high fidelity reproduction of each register's processing history and predictions during program restoration (also referred to as context switches). Further, the totality of each register's processing history and predictions might not be needed to achieve immediate pattern context during context switches. For example, TLB 143 may contain several kilobytes of state, but preserving 2-5 of the most frequently accessed entries may be sufficient to provide 80% processing accuracy after processor 110 restores the program. Therefore, when recording the internal register state data, processor 110 may store only the 2-5 most frequently accessed entries.

In some instances, the program state data and the internal register state data that is written to memory unit 150 can be encrypted to secure the data from other computing components that can also access the memory. The data can also be encrypted to obfuscate the architectural makeup of processor 110 from the other computing components with access to the memory. As illustrated in FIG. 1, memory unit 150 communicates directly with each of control unit 120, ALU 130, and registers 140.

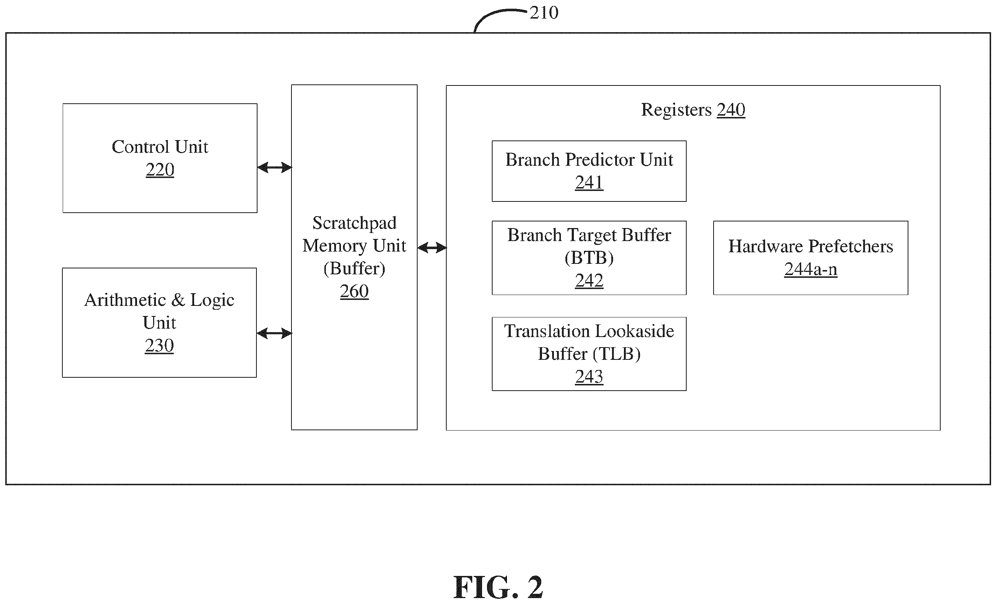

In some instances, a memory unit may be configured as a scratchpad memory unit. FIG. 2 illustrates an alternative CPU configuration in which the memory unit is configured as a scratchpad memory unit 260 contained in the processor 210. In this regard, registers 240 may include a branch predictor unit 241, branch target buffer (BTB) 242, translation lookaside buffer (TLB) 243, and hardware prefetchers 244a-n, which may be compared to branch predictor unit 141, branch target buffer (BTB) 142, translation lookaside buffer (TLB) 143, and hardware prefetchers 144a-n, respectively. The scratchpad memory unit 260 is located closest to ALU 230 and registers 240, which may be compared to ALU 130 and registers 140, respectively. As further illustrated in FIG.2, processor 210 also includes a control unit 220, which may be compared to control unit 120.

Scratchpad memory unit 260 can be configured as random access memory (RAM) or other such memory that is used to temporarily store program state data and internal register data until program restoration is executed. When program restoration is executed, the program state data and the internal register data associated with the restored program are removed from scratchpad memory unit 260. As such, the scratchpad memory unit 260 is available to store new program restoration data. Scratchpad memory unit 260 may be software controlled such that the amount of available memory therein changes depending on at least system preferences and/or program restoration preferences. In some instances, the buffer in which the program state data and the internal register data is stored is located in an operating system-designated memory location.

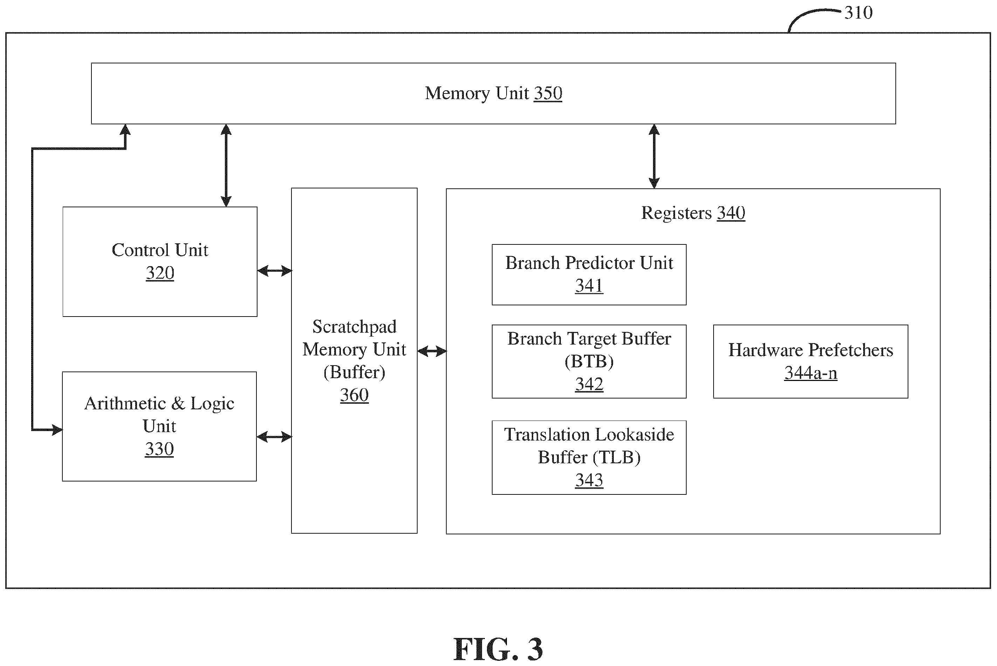

FIG. 3 illustrates an alternative CPU configuration. As illustrated in FIG. 3, processor 310 contains memory unit 350 and scratchpad memory unit 360, which may be compared to memory unit 150 and scratchpad memory unit 260, respectively. In this configuration, scratchpad memory unit 360 may store the program state data and internal register data for executing program restoration while memory unit 350 may store data needed to execute one or more programs. In some instances, the program state data, the internal register data, and the data needed to execute the one or more programs can be stored in any one of memory unit 350 and/or scratchpad memory unit 360.

Memory units and scratchpad memory unitscan be a combination of volatile and non-volatile memory. For example, memory units 150, 350 and scratchpad memory units 260, 360 may be any type of non-transitory computer readable medium capable of storing information, such as a hard-drive, solid state drive, tape drive, optical storage, memory card, ROM, RAM, DVD, CD-ROM, write-capable, and read-only memories. Memory units 150, 350 and scratchpad memory units 260, 360 may be volatile or non-volatile memory.

Memory units and scratchpad memory units may store, for example, instructions to be executed by a processor during program execution. Memory units 150, 350 and scratchpad memory units 260, 360 may also include cache line data that may be read, retrieved, manipulated, or stored by a processor, such as processor 110, 210, or 310.

Processors 110, 210, 310 may include one or more central processing units (CPUs), graphic processing units (GPUs), field-programmable gate arrays (FPGAs), and/or application-specific integrated circuits (ASICs), such as tensor processing units (TPUs).

The instructions stored in memory units 150, 350 and scratchpad memory units 260, 360 may include one or more instructions that, when executed by a processor, such as processors 110, 210, or 310, cause the processor to perform actions defined by the instructions. The instructions may be stored in object code format for direct processing, or in other formats including interpretable scripts or collections of independent source code modules that are interpreted on demand or compiled in advance. The instructions may include instructions for executing programs, terminating program execution, initiating program restoration, or the like.

The data stored in memory unit 150, 350 or scratchpad memory 260, 360 may be read, retrieved, stored, or modified by a processor, such as processor 110, 210, or 310, in accordance with the instructions. The data may be stored in computer registers, in a relational or non-relational database as a table having a plurality of different fields and records, or as JSON, YAML, proto, or XML documents. The data may also be formatted in a computer-readable format such as, but not limited to, binary values, ASCII, or Unicode. Moreover, the data may include information sufficient to identify relevant information, such as numbers, descriptive text, proprietary codes, pointers, references to data stored in other memories, including other network locations, or information used by a function to calculate relevant data.

Some of the instructions and the data can be stored on a removable SD card and others within a read-only computer chip. Some or all of the instructions and data can be stored in a location physically remote from, yet still accessible by, processors 110-310.

While not illustrated in FIGS. 1-3, processors 110-310 may be configured to receive user input from user input mechanisms, such as a keyboard, mouse, mechanical actuators, soft actuators, touchscreens, microphones, sensors, or the like. Further, processor 110 may be coupled to a computing device to communicate with a user via one or more user output mechanisms.

Processors 110-310 may be capable of direct and indirect communication over a network. The network itself may include various configurations and protocols including the Internet, World Wide Web, intranets, virtual private networks, wide area networks, local networks, and private networks using communication protocols proprietary to one or more companies. The network may support a variety of short- and long-range connections. The short- and long-range connections may be made over different bandwidths, such as 2.402 GHz to 2.480 GHz, commonly associated with the Bluetooth^{®} standard, 2.4 GHz and 5 GHz, commonly associated with the Wi-Fi^{®} communication protocol; or with a variety of communication standards, such as the LTE^{®} standard for wireless broadband communication. The network may, in addition or alternatively, also support wired connections, including over various types of Ethernet connection.

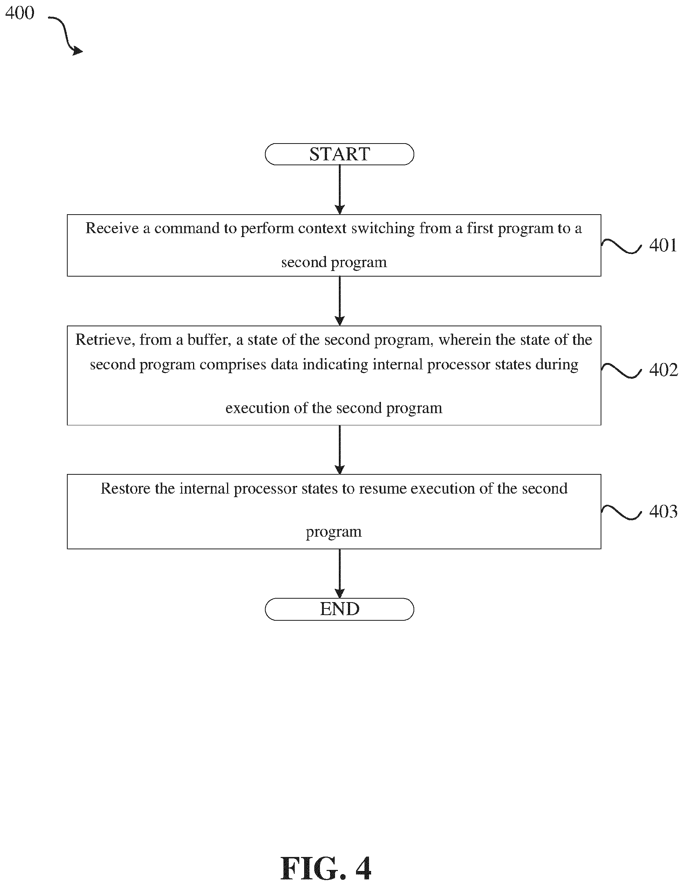

The program state data and the internal register state data that is written to one of memory unit or scratchpad memory unit is later retrieved by the processor during a context switch to restore a previously-executed program. FIG. 4 illustrates a flow diagram 400 for an example method for restoring program states using microarchitectural scratchpads, using processor 110. The operations described herein are presented in the current order by way of example, and the order is not meant to be limiting. Moreover, operations may be omitted from or added to the example method.

At block 401, a processor receives a command to perform context switching from a first program to a second program. Processor 110 receives one or more commands via user input mechanisms and/or techniques. For example, processor 110 may receive, via one or more user input mechanisms and/or techniques coupled to processor 110, one or more commands to execute the first program. Processor 110 may retrieve from memory, such as at least one of memory unit 150 or scratchpad memory unit 160, instructions and data to launch and execute the first program. At a time point after execution of the first program, processor 110 may receive, via one or more user input mechanisms and/or techniques, the command to terminate execution of the first program and to execute the second program.

Based on receiving the command to perform context switching from the first program to the second program, processor 110 stores data indicating a state of the first program in a buffer. The state of the first program comprises internal processor state data. More specifically, based on receiving the command, processor 110 identifies program state data that indicates the state of the program prior to the termination of program execution. Processor 110 also identifies internal register state data that indicates the state of each register within processor 110 that is used to execute the programs. Processor 110 stores the program state data and the internal register state data in memory, such as memory unit 150 or scratchpad memory unit 160.

At block 402, the processor retrieves, from a buffer, a state of the second program. For example, processor 110 retrieves from at least one of memory unit 150 or scratchpad memory unit 160, program state data and internal register state data associated with the most recent execution of the second program.

At block 403, the processor restores the internal processor states to resume execution of the second program. More specifically, processor 110 uses the program state data to restore the state of the second program. Processor 110 uses the internal register state data to restore the state of each register therein to the most recent register state during the most recent execution of the second program.

It is understood that the aspects of the disclosure may be implemented according to a variety of different configurations and quantities of computing devices, including in paradigms for sequential or parallel processing, or over a distributed network of multiple devices.

The foregoing aspects of this technology offer program state restoration using microarchitectural scratchpads to provide immediate pattern context and to reduce program latency during context switching. A processor can be configured to store different data sets for program restoration, including program state data that restores the last-executed state of a program and internal register state data that restores the values of each register during the last-executed state of the program. This allows the processor to achieve immediate pattern context for programs that experience a high context switch rate since the processor can use the program state data and internal register state data to achieve a steady-state prior to the next context switch.

Aspects of this disclosure can be implemented in digital electronic circuitry, in tangibly-embodied computer software or firmware, and/or in computer hardware, such as the structure disclosed herein, their structural equivalents, or combinations thereof. Aspects of this disclosure can further be implemented as one or more computer programs, such as one or more modules of computer program instructions encoded on a tangible non-transitory computer storage medium for execution by, or to control the operation of, one or more data processing apparatus. The computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, generated to encode information for transmission to suitable receiver apparatus for execution by a data processing apparatus.

The term "configured" is used herein in connection with systems and computer program components. For a system of one or more computers to be configured to perform particular operations or actions means that the system has installed on it software, firmware, hardware, or a combination thereof that cause the system to perform the operations or actions. For one or more computer programs to be configured to perform particular operations or actions means that the one or more programs include instructions that, when executed by one or more data processing apparatus, cause the apparatus to perform the operations or actions.

The term "data processing apparatus" refers to data processing hardware and encompasses various apparatus, devices, and machines for processing data, including programmable processors, a computer, or combinations thereof. The data processing apparatus can include special purpose logic circuitry, such as a field programmable gate array (FPGA) or an application specific integrated circuit (ASIC). The data processing apparatus can include code that creates an execution environment for computer programs, such as code that constitutes processor firmware, a protocol stack, a database management system, an operating system, or combinations thereof.

The data processing apparatus can include special-purpose hardware accelerator units for implementing machine learning models to process common and compute-intensive parts of machine learning training or production, such as inference or workloads. Machine learning models can be implemented and deployed using one or more machine learning frameworks.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a standalone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "database" refers to any collection of data. The data can be unstructured or structured in any manner. The data can be stored on one or more storage devices in one or more locations. For example, an index database can include multiple collections of data, each of which may be organized and accessed differently.

The term "engine" refers to a software-based system, subsystem, or process programmed to perform one or more specific functions. The engine can be implemented as one or more software modules or components, or can be installed on one or more computers in one or more locations. A particular engine can have one or more computers dedicated thereto, or multiple engines can be installed and running on the same computer or computers.

The processes and logic flows described herein can be performed by one or more computers or special purpose logic circuitry, such as a system on chip (SoC) executing one or more computer programs to perform functions by operating on input data and generating output data. The processes and logic flows can also be performed by special purpose logic circuitry, or by a combination of special purpose logic circuitry and one or more computers.

A computer or special purposes logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, a personal digital assistant (PDA), a mobile audio or video player, a game console, a Global Positioning System (GPS), or a portable storage device, e.g., a universal serial bus (USB) flash drive, as examples.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Aspects of the disclosure can be implemented in a computing system that includes a back-end component, e.g., as a data server, a middleware component, e.g., an application server, or a front end component, e.g., a client computer having a graphical user interface, a web browser, or an app, or any combination thereof. The components of the system can be interconnected by any form or medium of digital data communication, such as a communication network. Examples of communication networks include a local area network (LAN) and a wide area network (WAN), e.g., the Internet.

The computing system can include clients and servers. A client and server can be remote from each other and interact through a communication network. The relationship of client and server arises by virtue of the computer programs running on the respective computers and having a client-server relationship to each other. For example, a server can transmit data, e.g., an HTML page, to a client device, e.g., for purposes of displaying data to and receiving user input from a user interacting with the client device. Data generated at the client device, e.g., a result of the user interaction, can be received at the server from the client device.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the implementations should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements.

## Claims

1. A method for restoring program states, the method comprising:
receiving, by one or more processors, a command to perform context switching from a first program to a second program;
retrieving, from a buffer, a state of the second program, wherein the state of the second program comprises data indicating internal register states during a previous execution of the second program; and
restoring the state of the second program and the internal register states to resume execution of the second program.

2. The method of claim 1, wherein a size of the buffer changes dynamically based on an amount of internal register state data to be stored in the buffer.

3. The method of claim 1 or 2, further comprising storing data indicating a state of the first program in the buffer, wherein the state of the first program comprises internal register state data.

4. The method of one of claims 1 to 3, wherein restoring the internal register states causes a processor to reduce an amount of time to perform pattern recognition to achieve a processor steady-state, wherein the processor steady-state indicates the processor achieved immediate pattern context based on restoring the state of the second program and the internal register states, and/or wherein restoring the state of the second program and the internal register states comprises restoring internal register state values from the previous execution of the second program.

5. The method of one of claims 1 to 4, wherein the buffer corresponds to a microarchitectural scratchpad memory unit.

6. The method of one of claims 1 to 5,
wherein each internal register comprises a microarchitectural scratchpad memory unit,
wherein the method optionally further comprises clearing the microarchitectural scratchpad memory unit after restoration of the second program.

7. A system for restoring program states, the system comprising:
one or more processors;
one or more registers within the one or more processors, wherein a processor is configured to:
receive a command to perform context switching from a first program to a second program;
retrieve, from a buffer, a state of the second program, wherein the state of the second program comprises data indicating internal register states during a previous execution of the second program; and
restore the state of the second program and the internal register states to resume execution of the second program.

8. The system of claim 7, wherein a size of the buffer changes dynamically based on an amount of internal register state data to be stored in the buffer.

9. The system of claim 7 or 8, wherein the processor is further configured to store data indicating a state of the first program in the buffer, wherein the state of the first program comprises internal register state data.

10. The system of one of claims 7 to 9, wherein the processor is further configured to, based on restoring the internal register states, reduce an amount of time to perform pattern recognition to achieve a processor steady-state, wherein the processor steady-state indicates the processor achieved immediate pattern context based on restoring the state of the second program and the internal register states.

11. The system of one of claims 7 to 10, wherein each internal register comprises a microarchitectural scratchpad memory unit,
wherein the processor is, optionally, further configured to clear the microarchitectural scratchpad memory unit after restoration of the second program.

12. The system of one of claims 7 to 11, wherein the processor is further configured to restore internal register state values from the previous execution of the second program.

13. A non-transitory computer readable storage medium storing instructions that, when executed by one or more processors for restoring program states, cause the one or more processors to:
receive a command to perform context switching from a first program to a second program;
retrieve, from a buffer, a state of the second program, wherein the state of the second program comprises data indicating internal register states during a previous execution of the second program; and
restore the state of the second program and the internal register states to resume execution of the second program.

14. The non-transitory computer readable storage medium of claim 13, wherein restoring the state of the second program and the internal register states further causes the one or more processors to restore internal register state values from a previous execution of the second program, and/or wherein the buffer corresponds to a microarchitectural scratchpad memory unit.

15. The non-transitory computer readable storage medium of claim 13 or 14, wherein each internal register comprises a microarchitectural scratchpad memory unit, and/or wherein the one or more processors are further configured to store data indicating a state of the first program in the buffer, wherein the state of the first program comprises internal register state data.
